# EUROPEAN PATENT APPLICATION

(11) **EP 1 600 706 A2**
(43) Date of publication of application: **30.11.2005**
(21) Application number: 05010214.4
(22) Date of filing: 11.05.2005
(51) Int. Cl.: F24F 12/00, F24F 7/013

(54) **Ventilator**

(30) Priority: 21.05.2004 KR 2004036386
(71) Applicant: LG ELECTRONICS INC., Seoul (KR)
(72) Inventor: Lee, Gi Seop 107-1906, Byucksan Blooming Apt., Seoul (KR); Kim, Kyung Hwan 103-1901, Moraksan Hyundai Apt., Uiwang-si Gyeonggi-do (KR); Kim, Jeong Yong, Seoul (KR); Choi, Keun Hyoung, Dongjak-gu Seoul (KR); Choi, Ho Seon, Seoul (KR)
(74) Representative: Urner, Peter

(57) **Abstract**

A built-in ventilator mountable on a wall of a building includes an interior panel provided on an interior wall surface, the interior panel being provided with an interior air intake portion through which interior air flows in and an interior air supply portion through which exterior air is introduced into an interior space, an exterior panel provided on an exterior wall surface, the exterior panel being provided with an exterior air intake portion through which exterior air flows in and an exterior air exhaust portion through which interior air is exhausted to an exterior space, a partition disposed between the interior and exterior panels to separate the exterior air from the interior air, a fan unit for forcedly generating an air current for ventilation, and a regeneration heat exchanger for minimizing heat loss by heat-exchanging the interior air with the exterior air.

## Description

### BACKGROUND OF THE INVENTION

### Field of the Invention

The present invention relates to a ventilator for allowing fresh air to circulate throughout an interior space, and more particularly, to a built-in ventilator mountable on a ceiling or a wall.

### Discussion of the Related Art

Generally, air circulation between an interior space and an exterior space may be naturally performed by opening windows or doors, or may be forcedly performed by operating a ventilator, thereby maintaining the fresh interior environment.

When the air circulation is naturally performed, a large amount of dust and dirt may be introduced through the windows or doors. Particularly, when it rains, the rainwater may flow into the interior space. Therefore, a ventilator for forcedly allowing fresh air to circulate throughout the interior space has been recently developed.

A conventional ventilator for forcedly circulating the air includes a plurality of ducts built on a ceiling to communicate an interior space with an exterior space and a blower installed on the ducts for forcedly circulating air.

To install the conventional ventilator, the interior space has to have a high ceiling to lay the ducts on the ceiling, thereby increasing the installing costs. Furthermore, due to the length or shape of the ducts, the flow resistance of the air is increased, thereby increasing airflow noise and requiring an expensive high-volume blower.

### SUMMARY OF THE INVENTION

Accordingly, the present invention is directed to a ventilator that substantially obviates one or more problems due to limitations and disadvantages of the related art.

An object of the present invention is to provide a ventilator that is designed to be easily installed.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a built-in ventilator mountable on a wall of a building, including: an interior panel provided on an interior wall surface, the interior panel being provided with an interior air intake portion through which interior air flows in and an interior air supply portion through which exterior air is introduced into an interior space; an exterior panel provided on an exterior wall surface, the exterior panel being provided with an exterior air intake portion through which exterior air flows in and an exterior air exhaust portion through which interior air is exhausted to an exterior space; a partition disposed between the interior and exterior panels to separate the exterior air from the interior air; a fan unit for forcedly generating an air current for ventilation; and a regeneration heat exchanger for minimizing heat loss by heat-exchanging the interior air with the exterior air.

The partition may be disposed in parallel with the interior and exterior panels.

The fan unit may include an exhaust fan provided between the interior panel and the partition to direct the interior air from the interior air intake portion to the exterior air exhaust portion; and a supply fan disposed between the exterior panel and the partition to direct the exterior air from the exterior air intake portion to the interior air supply portion.

Rotational shafts of the respective exhaust fan and the supply fan may be coaxially disposed.

The exhaust and supply fans may be driven by a single common motor.

The exhaust and supply fans may include first and second Sirocco fans, respectively.

Rotational shafts of the first and second Sirocco fans may be vertically provided to the partition.

The fan unit may comprise an exhaust guide defining an air exhaust portion of each of the first and second Sirocco fans.

The regeneration heat exchanger may comprise a first heat exchanger provided on a first end of the partition; and a second heat exchanger provided on a second end of the partition.

The air exhaust portion of each of the first and second Sirocco fans may comprise a first exhaust hole exhausting the air toward the first heat exchanger; and a second exhaust hole exhausting the air toward the second heat exchanger.

The exhaust guide may comprise a first guide guiding the air by blocking a portion of an outer circumference of each of the first and second Sirocco fans; and a second guide guiding the air by blocking another portion of the outer circumference of each of the first and second Sirocco fans.

The interior air intake portion may be formed on a middle portion of the interior panel.

The interior air supply portion may be formed on opposite ends of the interior panel.

The exterior air intake portion may be formed on a middle portion of the exterior panel to correspond to the interior air intake portion and the exterior air exhaust portion is formed on opposite ends of the exterior panel to correspond to the interior air supply portion.

The built-in ventilator may further comprise a filter unit for purifying the exterior air being supplied to the interior space by the supply fan.

The filter unit may be provided between the supply fan and the regeneration heat exchanger.

The filter unit may be provided between the regeneration heat exchanger and the interior air supply portion.

The built-in ventilator may further comprise a rubber for selectively opening the interior air intake portion and the interior air supply portion.

The built-in ventilator may further comprise a rubber for selectively opening the exterior air intake portion and the exterior air exhaust portion.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a front view of a built-in ventilator installed on a wall according to an embodiment of the present invention;

FIG. 2 is an exploded perspective view of a built-in ventilator depicted in FIG. 1;

FIG. 3 is a front view of a built-in ventilator depicted in FIG. 1, in which an interior panel is removed;

FIG. 4 is a view of a ventilator depicted in FIG. 1, which is operating in an interior air cooling mode; and

FIG. 5 is a view of a ventilator depicted in FIG. 1, which is operating in an interior air heating mode.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

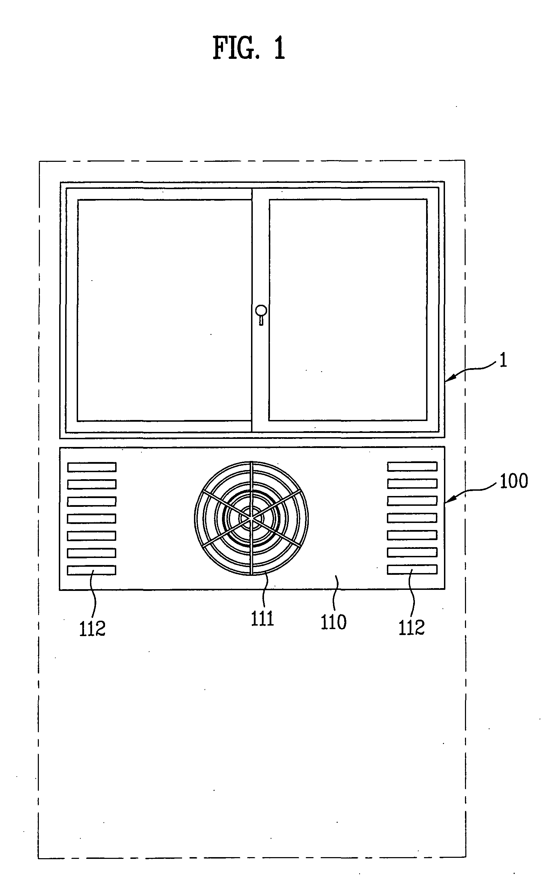

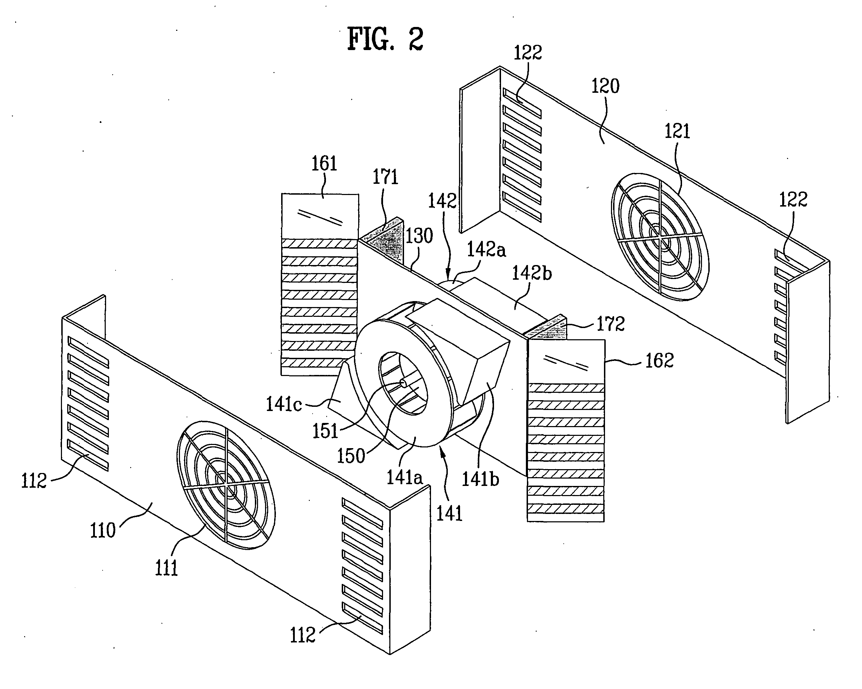

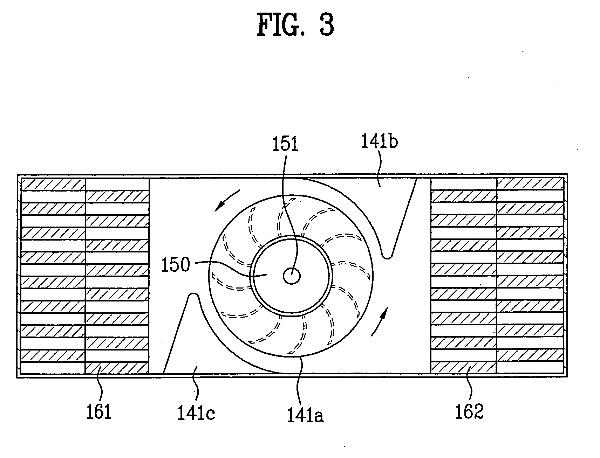

FIGs. 1 to 3 show a ventilator according to an embodiment of the present invention.

Referring to FIGs. 1 to 3, the inventive ventilator 100 is designed to be installed through a wall of a building. That is, one side of the ventilator 100 is exposed to an exterior space and the other side of the ventilator 100 is exposed to an interior space.

In this embodiment, although the ventilator 100 is installed under a window 10, the present invention is not limited to this case. For example, the ventilator 100 may be installed on the window 1 or other portions of the wall, which is remote from the window.

The ventilator 100 includes an interior panel 110 mounted on an interior wall and exposed to the interior space and an exterior panel 120 mounted on an exterior wall and exposed to the exterior space.

The interior panel 110 is provided with interior air intake portion 111 through which interior air flows in and an interior air supply portion 112 through which exterior air is introduced into the interior space.

The exterior panel 120 is provided with exterior air intake portion 121 through which exterior air flows in and an exterior air exhaust portion 122 through which the interior air is exhausted to the exterior space.

That is, the exterior air flowing into through the exterior air intake portion 121 is supplied to the interior space through the interior air supply portion 112 and the interior air flowing into through the interior air intake portion 111 is exhausted to the exterior space through the exterior air exhaust unit 122, thereby allowing the circulation of the interior air.

Disposed between the interior and exterior panels 110 and 120 are a partition 130 for separating the exterior air introduced into the interior space and the interior air exhausted to the exterior space from each other. A fan unit is also provided between the interior and exterior panels 110 and 120 to forcedly supply the exterior air into the interior space.

That is, the fan unit includes an exhaust fan 141 exhausting the interior air to the exterior space and a supply fan 142 supplying the exterior air to the interior space.

That is, the exhaust fan 141 is designed to direct the air from the interior air intake portion 111 to the exterior air exhaust portion 122 while the supply fan 142 is designed to direct the air from the exterior air intake portion 121 to the exterior air supply portion 112.

In this embodiment, although the partition 130 is disposed in parallel with the interior and exterior panels 110 and 120, the present invention is not limited to this case.

The partition 130 may be installed to divide a space defined between the interior and exterior panels 110 and 120 into front and rear halves.

The exhaust fan 141 is disposed between the interior panel 110 and the partition 130 while the supply fan 142 is disposed between the exterior panel 120 and the partition 130.

Rotational shafts of the exhaust and supply fans 141 and 142 may be coaxially disposed and driven by a single common motor.

The exhaust and supply fans 141 and 142 may respectively include first and second Sirocco fans 141a and 142a that may be driven with constant pressure and low noise.

The first and second Sirocco fans 141a and 142a are designed to intake the air in their axial directions and exhaust the air in their radial directions.

To minimize the size of the ventilator 100, the rotational shafts 151 of the respective first and second Sirocco fans 141a and 142a are vertically provided to the partition 130.

That is, an intake end of the exhaust fan 141 is disposed toward the interior air intake portion 111 and the intake end of the supply fan 142 is disposed toward the exterior air intake portion 121.

Accordingly, since a distance between the exhaust fan 141 and the interior panel 110 as well as a distance between the supply fan 142 and the exterior fan 120 can be minimized, the overall size of the ventilator 100 can be minimized.

In this embodiment, although the first and second Sirocco fans 141 a and 142a are provided on a middle portion of the partition 130, the present invention is not limited to this case. For example, the first and second Sirocco fans 141 a and 142a may be provided on other location in a longitudinal direction of the partition 130.

When the first and second Sirocco fans 141a and 142a are provided on the middle portion of the partition 130, the interior air intake portion 111 is formed on a middle portion of the interior panel 110 and the exterior air intake portion 121 is also formed on a middle portion of the exterior panel 120.

The interior air intake portion 111 may be formed in a grill type and the exterior air intake portion may be also formed in a grill type.

In the present invention, the interior and exterior airs flowing into through the respective interior and exhaust air intake portions 111 and 121 are directed toward opposite ends of the partition 130 by the respective first and second Sirocco fans 141a and 142a.

That is, the air flow of the first and second Sirocco fans 141a and 142a are guided by respective exhaust guide units.

Each of the exhaust portions of the respective Sirocco fans 141a and 142a includes a first exhaust hole exhausting the air toward a first end of the partition 130 and a second exhaust hole exhausting the air toward a second end of the partition 130.

The exhaust guide unit for the first Sirocco fan 141a includes a first guide 141b guiding the air by blocking a portion of an outer circumference of the first Sirocco fan 141a and a second guide 141c guiding the air by blocking another portion of the outer circumference of the first Sirocco fan 141 a. The exhaust guide unit for the second Sirocco fan 142a includes a first guide 142b guiding the air by blocking a portion of an outer circumference of the second Sirocco fan 142a and a second guide (not shown) guiding the air by blocking another portion of the outer circumference of the second Sirocco fan 142a.

The first guides 141b and 142b are disposed on respective sides of upper portions of the first and second Sirocco fans 141a and 142a and the second guides 141c are disposed on respective sides of upper portions of the first and second Sirocco fans 141 a and 142a.

That is, each of the first and second guides 141b and 142b are formed in a triangular-shape having a side curved with a curvature corresponding to that of the outer circumference of each Sirocco fan. The first and second guides 141b and 142b are symmetrically disposed with respect to the respective rotational shaft of the Sirocco fans such and provided on the partition 130 such that the curved sides thereof face the respective Sirocco fans.

Therefore, amounts of airs exhausted through the first and second exhaust holes defined by the first guides 141b and 142b and the second guides 141c becomes identical to each other.

The air exhausted through the first and second exhaust holes of the first Sirocco fan 141a are guided toward the front opposite ends of the partition 130.

The air exhausted through the first and second exhaust holes of the first Sirocco fan 142a is guided to rear opposite ends of the partition 130.

The ventilator 100 of the present invention may further include a regeneration heat exchanger for minimizing the heat loss by heat-exchanging the interior air exhausted to the exterior space by the first Sirocco fan 141 a with the exterior air supplied to the interior space by the second Sirocco fan 142a.

The regeneration heat exchanger includes a first heat exchanger 161 provided on a first end of the partition 130 and a second heat exchanger 162 provided on a second end of the partition 130.

Each of the first and second heat exchangers 161 and 162 are formed in a hexahedron-shape, including a plurality of first fluid passages through which the exterior air being directed to the interior space flows and a plurality of second fluid passages through which the interior air being directed to the exterior space flows. The first and second fluid passages are alternately stacked one another. It is preferable that the first and second heat exchangers 161 and 162 are formed of material having high thermal conductivity.

The first and second fluid passages are disposed to cross at right angles each other.

The interior and exterior airs exhausted from the exhaust and supply fans 141 and 142 toward the opposite ends of the partition 130 heat-exchange with each other while passing through the first and second heat exchangers 161 and 162.

The interior and exterior airs exhausted after heat-exchanging with each other are exhausted through the exterior air exhaust portion 122 and the interior air supply portion 112.

The interior air supply portion 112 is formed on opposite ends of the interior panel 110 in front of the first and second heat exchangers 161 and 162.

The exterior air exhaust portion 122 is formed on opposite ends of the exterior panel 120 in rear of the first and second heat exchangers 161 and 162.

The ventilator 100 of the present invention may further include a filter unit purifying the exterior air being directed to the interior space by the supply fan 142.

For example, the filter unit includes a first filter 171 disposed between the first exhaust hole of the supply fan 142 and the first heat exchanger 161 and a second filter 172 disposed between the second exhaust hole of the supply fan 142 and the second heat exchanger 162, thereby removing foreign objects from the exterior air being directed to the interior space.

Alternatively, the first filter 171 may be disposed between the first heat exchanger 161 and one side of the interior air supply portion 112 of the interior panel 110 while the second filter may be disposed between the second heat exchanger 162 and the other side of the interior air supply portion 112.

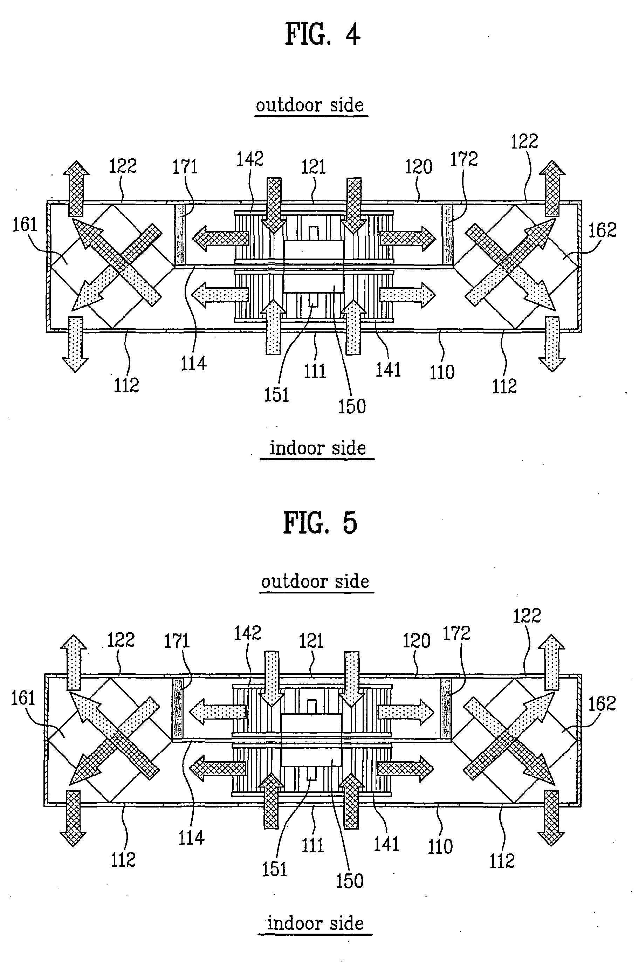

An operation of the built-in ventilator 100 will be described below with reference to FIGs. 4 and 5.

FIG. 4 shows the inventive ventilator that is operating in an interior air cooling mode and FIG. 5 shows the inventive ventilator that is operating in an interior air heating mode and FIG. 5

Referring first to FIG. 4, when the ventilator is turned on, the exhaust and supply fans 141 and 142 are operated to generate air intake force.

Interior cool air flows in through the interior air intake portion 111 and exterior warm air flows in through the exterior air intake portion 121.

The interior cool air flowing to the interior air intake portion 111 is directed to the first Sirocco fan 141a in an axial direction and is then exhausted out of the first Sirocco fan 141 a in a radial direction by the first and second guides 141b and 141 c.

The air exhausted from the first Sirocco fan 141a is introduced into the second fluid passages of the first and second heat exchangers 161 and 162 provided on respective opposite ends of the partition 130.

At the same time of the above procedure, the exterior worm air flowing to the exterior air intake portion 121 is directed to the second Sirocco fan 142a in an axial direction and is then exhausted out of the second Sirocco fan 142a in a radial direction by the first guide 142b and the second guide (not shown).

The air exhausted from the second Sirocco fan 142a is introduced into the first fluid passages of the first and second heat exchangers 161 and 162 provided on respective opposite ends of the partition 130 via the first and second filters 171 and 172.

In the course of the above, the interior cool air and the exterior worm air that pass through the first and second heat exchangers 161 and 162 heat-exchange with each other, thereby cooling the exterior worm air by the interior cool air.

The interior air exhausted from the first and second heat exchangers 161 and 162 is exhausted to the exterior space through the exterior air exhaust portion 122. The exterior air exhausted from the first and second heat exchangers 161 and 162 is supplied to the interior space through the interior air supply portion 112.

Referring to FIG. 5, interior worm air flows in through the interior air intake portion 111 while exterior cool air flows in through the exterior air intake portion 121.

While the interior worm air and the exterior cool air heat-exchange with each other by the first and second heat exchangers 161 and 162, the exterior cool air is heated by the interior worm air and is then supplied to the interior space.

Since other processes are identical to those of the interior air cooling mode, the detailed description thereof will be omitted herein.

As described above, the ventilator of the present invention can be selectively operated in cooling and heating modes according to the seasons.

Furthermore, since the exterior air is introduced into the interior space after the foreign objects contained in the exterior air are removed by the filters, the hygienically air ventilation becomes possible.

As described above, the inventive ventilator has the following advantages.

First, the inventive ventilator is installed on the wall, there is no need for the ducts, thereby lowering the ceiling height and saving the installing costs.

Second, since the supply and exhaust fans are driven by a single common motor, it is possible to make the ventilator compact.

Third, since the first and second Sirocco fans having the respective rotational shafts perpendicular to the partition disposed in parallel with the interior and exterior panels are provided, the ventilator can be operated with constant pressure and low noise and the size of the ventilator can be minimized.

Fourth, since the regeneration heat exchanger is provided, the energy loss can be minimized and the ventilation can be effectively realized at winter and summer seasons.

Fifth, since the filters are provided to purify the exterior air supplied to the interior space, the pollution of the regeneration heat exchanger can be prevented and the fresh air can be supplied to the interior space.

It will be apparent to those skilled in the art that various modifications and variations can be made in the present invention. Thus, it is intended that the present invention covers the modifications and variations of this invention provided they come within the scope of the appended claims and their equivalents.

## Claims

1. A built-in ventilator mountable on a wall of a building, comprising:
an interior panel provided on an interior wall surface, the interior panel being provided with an interior air intake portion through which interior air flows in and an interior air supply portion through which exterior air is introduced into an interior space;
an exterior panel provided on an exterior wall surface, the exterior panel being provided with an exterior air intake portion through which exterior air flows in and an exterior air exhaust portion through which interior air is exhausted to an exterior space;
a partition disposed between the interior and exterior panels to separate the exterior air from the interior air;
a fan unit for forcedly generating an air current for ventilation; and
a regeneration heat exchanger for minimizing heat loss by heat-exchanging the interior air with the exterior air.

2. The built-in ventilator of claim 1, wherein the partition is disposed in parallel with the interior and exterior panels.

3. The built-in ventilator of claim 2, wherein the fan unit comprises:
an exhaust fan provided between the interior panel and the partition to direct the interior air from the interior air intake portion to the exterior air exhaust portion; and
a supply fan disposed between the exterior panel and the partition to direct the exterior air from the exterior air intake portion to the interior air supply portion.

4. The built-in ventilator of claim 3, wherein rotational shafts of the respective exhaust fan and the supply fan are coaxially disposed.

5. The built-in ventilator of claim 4, wherein the exhaust and supply fans are driven by a single common motor.

6. The built-in ventilator of claim 4, wherein the exhaust and supply fans include first and second Sirocco fans, respectively.

7. The built-in ventilator of claim 6, wherein rotational shafts of the first and second Sirocco fans are vertically provided to the partition.

8. The built-in ventilator of claim 7, wherein the fan unit comprises an exhaust guide defining an air exhaust portion of each of the first and second Sirocco fans.

9. The built-in ventilator of claim 8, wherein the regeneration heat exchanger comprises:
a first heat exchanger provided on a first end of the partition; and
a second heat exchanger provided on a second end of the partition.

10. The built-in ventilator of claim 9, wherein the air exhaust portion of each of the first and second Sirocco fans comprises:
a first exhaust hole exhausting the air toward the first heat exchanger; and
a second exhaust hole exhausting the air toward the second heat exchanger.

11. The built-in ventilator of claim 10, wherein the exhaust guide comprises:
a first guide guiding the air by blocking a portion of an outer circumference of each of the first and second Sirocco fans; and
a second guide guiding the air by blocking another portion of the outer circumference of each of the first and second Sirocco fans.

12. The built-in ventilator of claim 3, wherein the interior air intake portion is formed on a middle portion of the interior panel.

13. The built-in ventilator of claim 12, wherein the interior air supply portion is formed on opposite ends of the interior panel.

14. The built-in ventilator of claim 13, wherein the exterior air intake portion is formed on a middle portion of the exterior panel to correspond to the interior air intake portion and the exterior air exhaust portion is formed on opposite ends of the exterior panel to correspond to the interior air supply portion.

15. The built-in ventilator of claim 3, further comprising a filter unit for purifying the exterior air being supplied to the interior space by the supply fan.

16. The built-in ventilator of claim 15, wherein the filter unit is provided between the supply fan and the regeneration heat exchanger.

17. The built-in ventilator of claim 15, wherein the filter unit is provided between the regeneration heat exchanger and the interior air supply portion.

18. The built-in ventilator of claim 1, further comprising a rubber for selectively opening the interior air intake portion and the interior air supply portion.

19. The built-in ventilator of claim 1, further comprising a rubber for selectively opening the exterior air intake portion and the exterior air exhaust portion.
